# EUROPEAN PATENT SPECIFICATION

(11) **EP 4 522 103 B1**
(45) Date of publication and mention of the grant of the patent: **11.11.2026**
(21) Application number: 23724953.7
(22) Date of filing: 10.04.2023
(51) Int. Cl.: A61H 9/00

(54) **HOSE HAVING A MAGNETIC CONNECTOR**
SCHLAUCH MIT MAGNETISCHEM VERBINDER
TUYAU AYANT UN RACCORD MAGNÉTIQUE

(30) Priority: 12.05.2022 US 202263341069 P
(43) Date of publication of application: 19.03.2025
(73) Proprietor: Hill-Rom Services PTE. LTD., Singapore 768923 (SG)
(72) Inventor: KOH, Qingqing, Singapore 768923 (SG)
(74) Representative: Reddie & Grose LLP
(86) International application number: PCT/SG2023/050242
(87) International publication number: WO 2023/219557

(56) References cited:
- EP-B1- 1 319 880
- EP-B1- 2 514 478
- WO-A1-97/24543
- CN-A- 113 069 338
- US-A1- 2020 129 722
- US-A1- 2021 137 779

## Description

### BACKGROUND

The present disclosure relates to a pneumatic hose for use with a high frequency chest wall oscillation (HFCWO) therapy apparatus, and particularly to a pneumatic hose that delivers oscillatory pneumatic pulses from an air pulse generator of the HFCWO therapy apparatus to a garment that is worn by a patient. More particularly, the present disclosure relates to a pneumatic hose having an end that is attracted to a magnet included in the housing of the HFCWO therapy apparatus.

HFCWO therapy apparatuses in which high frequency oscillatory pneumatic pulses are delivered to a patient's chest wall to encourage freeing of mucus and/or other build-up from the upper respiratory tract of the patient are known in the art. For example, patients suffering from mucus build up, such as cystic fibrous patients, are oftentimes treated with such HFCWO therapy apparatuses. One example of a prior art HFCWO therapy apparatus is THE VEST^{™} airway clearance system available from Hill-Rom Company, Inc.

Connectors of current hoses of some prior art HFCWO systems include one or more tabs configured to be inserted into a small companion slot in the outlet port of an air pulse generator. Users have to first locate the small companion slot, followed by turning the connector in order to connect and lock the tab(s) into the outlet port of the air pulse generator. These tabs sometimes break during insertion of the connector into the outlet port because of misalignment between the tab(s) and the slot. Thus, there exists a need for a hose connector that is not orientation-dependent.

US2021/137779A1 describes devices, systems, and methods for HFCWO oscillation therapy that can enhance expectoration by preferred impact to the user to encourage mucus dislodging, including by successive pressure imposition to a chest engagement device to provide HFCWO.

EP2514478B1 describes a flexible plastic hose comprising a tubular hose body having web portions and a helical reinforcing rib, and a cuff mounted to an extremity of the hose body comprising a molded end fitting bonded to the extremity, and a stress relief element with a first segment having an internal screw-thread complementary to the helical reinforcing rib. Disclosed is also a method for making same, and use of the hose as a medical hose.

WO97/24543A1 describes lightweight hose which is formed from a heat seamable material and includes a helically-wound reinforcing member. The hose can be formed in a short, definite length and a relatively long, indefinite length by a mandrel and a continuous process, respectively. In one aspect of the invention, a lightweight conduit comprises a tubular wall formed of at least one ply of heat seamable material and at least one helical member whereby the at least one ply is bonded to itself and to the at least one reinforcing member without additional adhesive. The disclosure also relates to lightweight conduits in the form of connectors such as cuffs and T- and Y-connectors, respectively. The disclosure further relates to a method for forming a lightweight conduit, including but not limited to, the embodiments of a hose described therein. The method can be characterized by the steps of wrapping at least one ply of heat seamable material around a mandrel so that at least one portion thereof overlaps another portion, wrapping an elongated member helically around the mandrel, heating the material and the member to a predetermined temperature and time wherein the at least one portion will adhere to the other portion and form a conduit. Thereafter, the conduit can be removed from the mandrel.

US2020/129722A1 describes a connection assembly for a respiratory therapy system, comprising: an outlet assembly, said outlet assembly including an outlet housing and a swivelling disc located on said outlet housing, said outlet housing and said swivelling disc defining, at least in part, a recess; an outlet connector located at an end of a tube portion, said outlet connector including an electrical connector; and a cable having a first end to connect to the electrical connector and a second end to connect to at least one electrical component of the respiratory therapy system, said cable having a slack portion, wherein said outlet connector and said swivelling disc are rotatable in unison between a first position and a second position, and wherein the slack portion of the cable extends from the recess and wraps around the swivelling disc as the swivelling disc is rotated from the first position to the second position.

EP1319880B1 describes delivery conduits used in systems that provide positive pressure ventilation therapy. In particular, the disclosure relates to a sleeve that allows flexible conduits to be joined and sealed to a thermoplastic connector, allowing for gases to be supplied to the conduit. The sleeve is used in the over moulding of an end connector onto the conduit. The sleeve and method of attaching a connector to a conduit of the present invention has the advantage that it prevents the connector from loosening or breaking when the conduit is bent, pulled or stressed, which can occur in some cases where the connector is attached to the conduit using a bond, such as glue. Furthermore, the occurrences of flashing of plastic across the conduit walls will be prevented during moulding, ensuring that no air or water leakages occur within the conduit walls.

CN113069338A describes air bag type thoracic cavity pressing sputum excretion promoting equipment. The equipment comprises a base and an outer waistcoat, a machine body is installed at the top of the base, a shell is installed in the machine body, a motor is connected to the inner wall of the shell, a cam is connected to the output end of the motor, and a piston rod is arranged on one side of the cam. The equipment is simple in structure, when the motor drives the cam to rotate, the cam drives the piston rod and a front piston to reciprocate under the cooperation of a spring, in the process, by compressing gas, an expansion type air bag is intermittently and sequentially expanded and shrunk from bottom to top, the thoracic cavity of a patient is extruded, and the purpose of promoting sputum excretion is achieved; meanwhile, the distance between a rear piston and the front piston can be adjusted through a screw, the size of the space between the rear piston and the front piston is changed, when the size is reduced, the stroke of the front piston is kept unchanged all the time, the larger the pressure of gas exhausted by an air cylinder is, the faster the expansion response of the expansion type air bag is, and the equipment can be adjusted according to the conditions of different patients.

### Summary of the invention

The invention is defined in the independent claims. Embodiments of the invention are set out in the dependent claims.

### Outline of the disclosure

According to a first aspect of the present disclosure, a high frequency chest wall oscillation (HFCWO) system for applying HFCWO therapy to a torso of a patient may include an air pulse generator that may be configured to generate air pulses, a garment that may be configured to be worn by a patient, and at least one hose that may be configured to deliver air pulses from the air pulse generator to the garment. The air pulse generator may include a housing that may include at least one outlet port through which air pulses may be expelled from the housing and may further include a magnet that may be adjacent to the outlet port. The garment may include at least one air bladder that may receive the air pulses from the air pulse generator for application to the patient's torso. The at least one hose may include a tube that may be made of a pliable material, a reinforcement coil that may be coupled to the pliable material of the tube and may be configured as a helix extending between a first end region of the hose and a second end region of the hose, a first connector that may be attached to the first end region of the hose, and a second connector that may be attached to the second end region of the hose. The first connector may include a first annular member that may be configured for threaded engagement with the reinforcement coil at the first end region of the hose and a metal element that may be coupled to a distal end of the first annular member for attraction to the magnet when the first connector is coupled to the outlet port of the housing of the air pulse generator.

In some embodiments, a first helical groove of the first annular member may be configured for threaded engagement with the reinforcement coil within a bore of the tube at the first end region of the hose. The present disclosure contemplates that the first connector may include a second annular member that may have a second helical groove that may be configured for threaded engagement with the reinforcement coil and that may surround an outer surface of the tube at the first end region of the hose. Optionally, the first connector may include a third annular member that may be configured for threaded engagement with the reinforcement coil and that may surround the outer surface of the first end region of the hose. The third annular member may also surround a proximal end of the first annular member.

Alternatively or additionally, the first connector may include a second annular member that may be formed by an over mold to encapsulate the first annular member and a distal end of the tube such that the first annular member and the tube may be securely assembled. In some embodiments, the first connector may include a third annular member that may be configured for threaded engagement with the reinforcement coil and that may surround an outer surface of the tube and a proximal end of the first annular member. The second annular member may further encapsulate at least a distal end of the third annular member such that the first annular member, the third annular member, and the tube may be securely assembled.

If desired, the metal element of the first aspect may include a metal ring that may be embedded in the first annular member at the distal end of the first annular member. Additionally, a first end surface of the metal ring may be substantially coplanar with a distal end surface of the first annular member. In some embodiments, the magnet may comprise a magnetic ring that may be adjacent a proximal end of the outlet port.

It is contemplated that the second connector may include a first annular member that may be formed with a first helical groove that may be configured for threaded engagement with the reinforcement coil at the second end region of the hose. If desired, the first helical groove of the first annular member of the second connector may be configured for threaded engagement with the reinforcement coil within a bore of the tube at the second end region of the hose. Additionally or alternatively, the first annular member of the second connector may include first and second grooves at a distal end of the first annular member. The second connector may further include first and second O-rings that may be received in the respective first and second grooves so that the first and second O-rings may frictionally engage with an inner surface of a tubular inlet port of the at least one air bladder of the garment when the second connector is installed in the tubular inlet port. Optionally, the second connector may include a second annular member that may be that may be formed with a second helical groove that may be configured for threaded engagement with the reinforcement coil and may surround an outer surface of the tube at the second end region of the hose. If desired, the second connector may include a third annular member that may be formed with a third helical groove that may be configured for threaded engagement with the reinforcement coil and may surround the outer surface of the tube at the second end region of the hose and a proximal end of the first annular member.

Alternatively or additionally, the second connector may include a second annular member that may be formed by an over mold to encapsulate the first annular member and a distal end of the tube such that the first annular member and the tube may be securely assembled. In some embodiments, the second connector may include a third annular member configured for threaded engagement with the reinforcement coil and may surround an outer surface of the tube and a proximal end of the first annular member. The second annular member may further encapsulate at least a distal end of the third annular member such that the first annular member, the third annular member, and the tube may be securely assembled.

According to a second aspect of the present disclosure, a hose that may be configured to deliver air pulses from an air pulse generator to a bladder of a therapy garment vest may include a tube that may be made of a pliable material, a reinforcement coil that may be coupled to the pliable material of the tube and may be configured as a helix that may extend from a first end region of the hose to a second end region of the hose, and a first connector attached to the first end region of the hose. The first connector may include a first annular member that may be configured for threaded engagement with the reinforcement coil at the first end region of the hose and a metal element that may be coupled to a distal end of the first annular member for attraction to the magnet when the first connector is coupled to an outlet port of the air pulse generator.

In some embodiments, the first helical groove of the first annular member may be configured for threaded engagement with the reinforcement coil within a bore of the tube at the first end region of the hose. The present disclosure contemplates that the first connector may include a second annular member that may have a second helical groove that may be configured for threaded engagement with the reinforcement coil and may surround an outer surface of the tube at the first end region of the hose. Optionally, the first connector may include a third annular member that may be configured for threaded engagement with the reinforcement coil and that may surround the outer surface of the first end region of the hose. The third annular member may also surround a proximal end of the first annular member.

Alternatively or additionally, the first connector may include a second annular member that may be formed by an over mold to encapsulate the first annular member and a distal end of the tube such that the first annular member and the tube may be securely assembled. In some embodiments, the first connector may include a third annular member that may be configured for threaded engagement with the reinforcement coil and that may surround an outer surface of the tube and a proximal end of the first annular member. The second annular member may further encapsulate at least a distal end of the third annular member such that the first annular member, the third annular member, and the tube may be securely assembled.

If desired, the metal element of the second aspect may include a metal ring that may be embedded in the first annular member at the distal end of the first annular member. Additionally, a first end surface of the metal ring may be substantially coplanar with a distal end surface of the first annular member.

It is contemplated that the hose may further include a second connector. The second connector may have a first annular member that may be formed with a first helical groove that may be configured for threaded engagement with the reinforcement coil at the second end region of the hose. If desired, the first helical groove of the first annular member of the second connector may be configured for threaded engagement with the reinforcement coil within a bore of the tube at the second end region of the hose. Additionally or alternatively, the first annular member of the second connector may include first and second grooves at a distal end of the first annular member. The second connector may further include first and second O-rings that may be received in the respective first and second grooves so that the first and second O-rings may frictionally engage with an inner surface of a tubular inlet port of the bladder of the garment when the second connector is installed in the tubular inlet port. Optionally, the second connector may include a second annular member that may be that may be formed with a second helical groove that may be configured for threaded engagement with the reinforcement coil and may surround an outer surface of the tube at the second end region of the hose. If desired, the second connector may include a third annular member that may be formed with a third helical groove that may be configured for threaded engagement with the reinforcement coil and that may surround the outer surface of the tube at the second end region of the hose and a proximal end of the first annular member.

Alternatively or additionally, the second connector may include a second annular member that may be formed by an over mold to encapsulate the first annular member and a distal end of the tube such that the first annular member and the tube may be securely assembled. In some embodiments, the second connector may include a third annular member configured for threaded engagement with the reinforcement coil and that may surround an outer surface of the tube and a proximal end of the first annular member. The second annular member may further encapsulate at least a distal end of the third annular member such that the first annular member, the third annular member, and the tube may be securely assembled.

With regard to the HFCWO system of the first aspect, the reinforcement coil may include a reinforcement wire or a reinforcement thread molded integrally with the tube. Similarly with regard to the hose of the second aspect, the reinforcement coil may include a reinforcement wire or a reinforcement thread molded integrally with the tube.

Additional features, which alone or in combination with any other feature(s), such as those listed above and/or those listed in the claims, may comprise patentable subject matter and will become apparent to those skilled in the art upon consideration of the following detailed description of various embodiments exemplifying the best mode of carrying out the embodiments as presently perceived.

### BRIEF DESCRIPTION OF THE DRAWINGS

The detailed description particularly refers to the accompanying figures in which:
Fig. 1 is a perspective view of a high frequency chest wall oscillation (HFCWO) system having an air pulse generator, a therapy garment, and two hoses connecting the air pulse generator and the therapy garment;
Fig. 2 is a side view of one of the hoses of Fig. 1 showing a first connector attached to a first end region of the hose, a second connector attached to a second end region of the hose, a tube, and a reinforcement wire embedded in the tube and extending between the first end region and the second end region of the hose;
Fig. 3 is a partial section view of an outlet port of the air pulse generator of Fig. 1 and the first end region of the hose of Figs. 1 and 2 showing the first connector having a metal ring in confronting relation with a magnet of the outlet port;

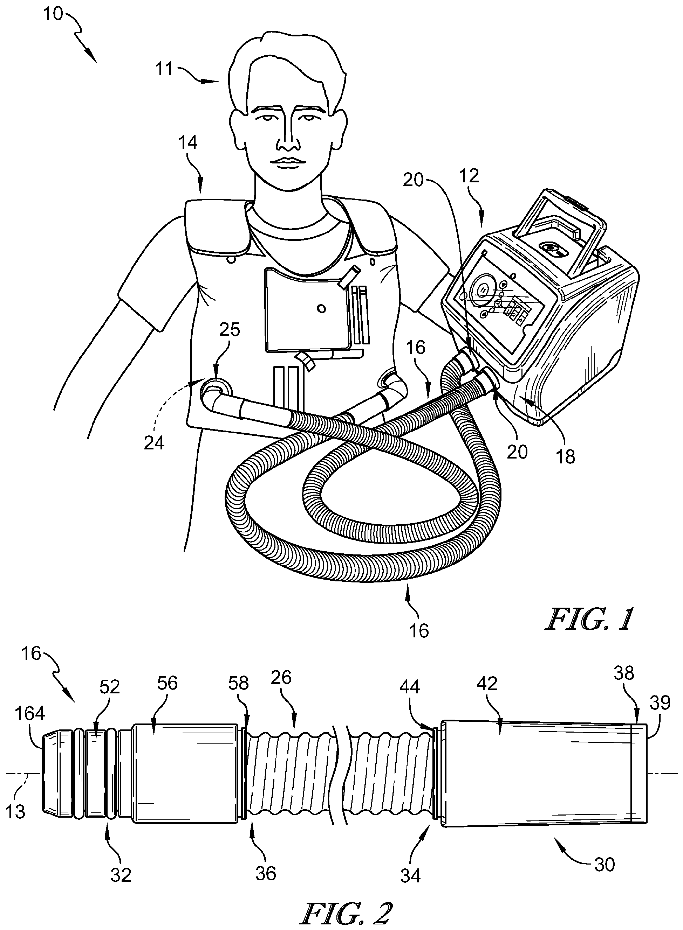

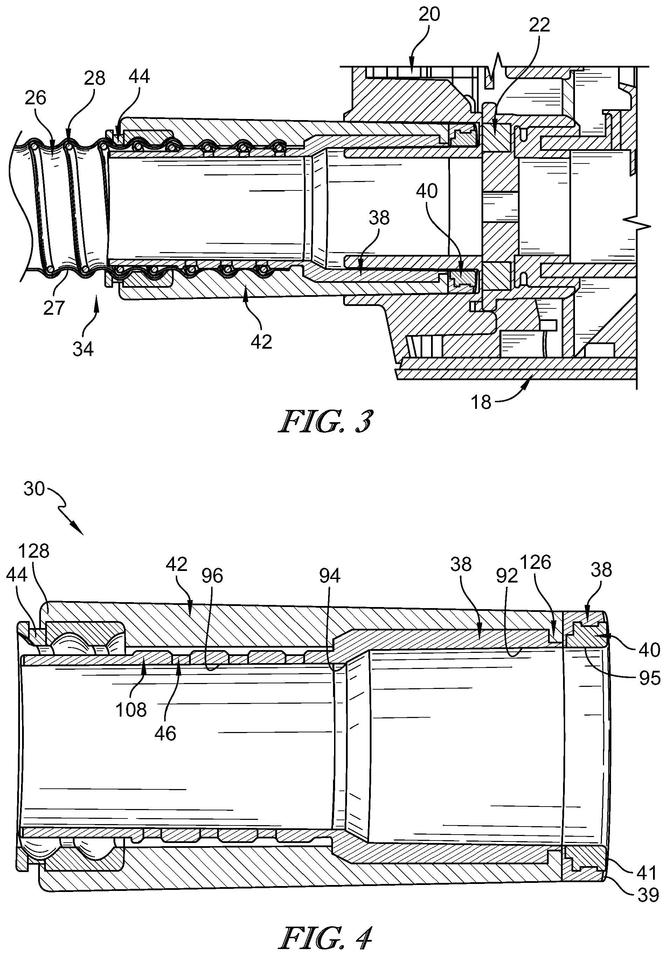

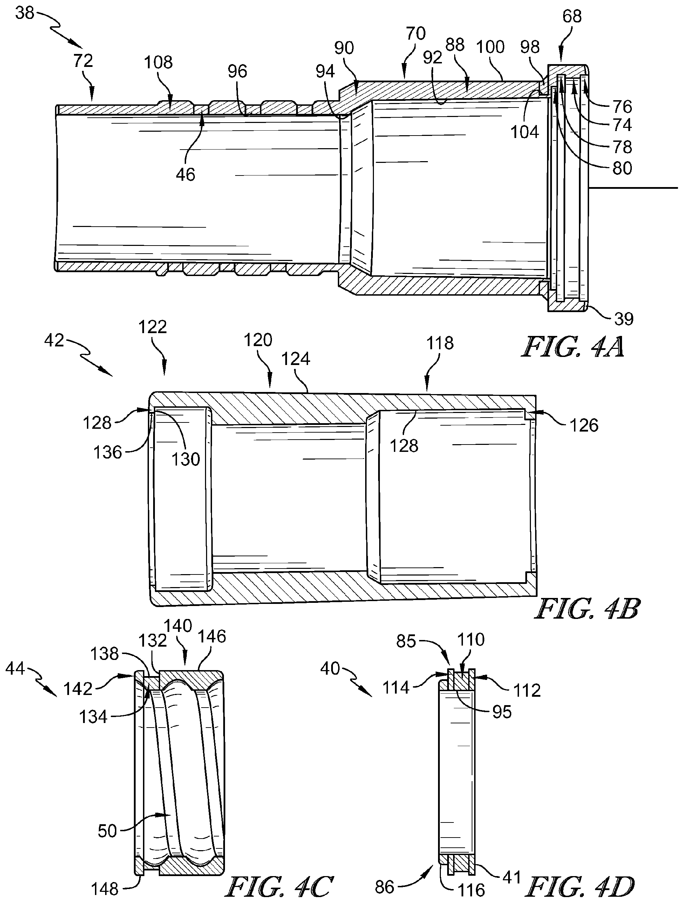

Fig. 4 is a section view of the first end region of the hose of Figs. 1 and 2 showing the first connector having a first annular member carrying the metal ring, a second annular member, and a third annular member, the first annular member having a threaded tubular portion situated within a bore of the tube and threadedly engaging the reinforcement wire, the second annular member encapsulating at least a portion of the first annular member, the tube, and the third annular member, and the third annular member surrounding a portion of the first and second annular members and a portion of the tube;
Fig. 4A is a section view of the first annular member of Fig. 4 showing the first annular member having the threaded tubular portion, an intermediate tubular portion, and an enlarged distal ring;
Fig. 4B is a section view of the second annular member of Fig. 4 showing the second annular member having a distal annular member-locking region, a medial annular member-locking region, and a proximal annular-member locking region;
Fig. 4C is a section view of the third annular member of Fig. 4 showing the third annular member having a distal region, an annular notch, and a proximal region;
Fig. 4D is a section view of the metal ring of Fig. 4 showing the metal ring having a distal end and a proximal end;
Fig. 5 is a perspective view of the first connector of Fig. 4 showing a distal end surface of the metal ring being substantially coplanar with a distal end surface of the first annular member;
Fig. 6 is an exploded view of the first connector of Fig. 4 showing from left to right, the metal ring, the first annular member, the second annular member, and the third annular member;
Fig. 7 is a partial section view of an inlet port of the therapy garment of Fig. 1 and the second end region of the hose of Figs. 1 and 2 showing the second connector having first and second O-rings engaging an inner surface of the inlet port;
Fig. 8 is a section view of the second end region of the hose of Figs. 1 and 2 showing the second connector having a first annular member, a second annular member, a third annular member, and the first and second O-rings;
Fig. 8A is a section view of the first annular member of Fig. 8 showing the first annular member having an O-ring cuff and a threaded tubular portion;
Fig. 8B is a section view of the second annular member of Fig. 8 showing the second annular member having a distal annular-member region and a proximal annular member-locking region;
Fig. 8C is a section view of the third annular member of Fig. 8 showing the third annular member having a distal region, an annular notch, and a proximal region
Fig. 9 is a perspective view of the second connector of Fig. 8 with the first and second O-rings removed; and
Fig. 10 is an exploded view of the second connector of Fig. 8 showing, from left to right, the first and second O-rings, the first annular member, the third annular member, and the second annular member.

### DETAILED DESCRIPTION

The present disclosure relates primarily to hose connectors that are employed, for example, on high frequency chest wall oscillation (HFCWO) systems to secure at least one hose to an air pulse generator and a garment configured to be worn by a patient. A first hose connector includes a first annular member having a magnetic ring coupled to a distal end of the first annular member. The air pulse generator has a housing which includes at least one outlet port and a magnet adjacent the outlet port. When it is desired to connect the first hose connector to the air pulse generator so air pulses expelled from the housing of the air pulse generator can be delivered to the garment, the first hose connector is inserted into the outlet port and secured to the outlet port with the attraction of the metal ring of the first annular member to the magnet of the outlet port. Thus, the insertion of the first hose connector into the outlet port is not dependent on the orientation of the first hose connector.

An example of a HFCWO system 10 is shown in Fig. 1. HFCWO system 10 is given as just one example of the type of system in which hose connectors, such as the first hose connector, may be used to connect a hose to an air pulse generator or garment configured to be worn by a patient. Accordingly, it should be appreciated that the teachings of the present disclosure are applicable to all types of chest wall therapy systems as well as other systems having hose connections.

HFCWO system 10 includes an air pulse generator 12, a garment 14, and hoses 16 extending between air pulse generator 12 and garment 14, as shown in Fig. 1. Air pulse generator 12 is configured to generate air pulses. Garment 14 is configured to be worn by a patient 11. Hoses 16 are configured to deliver the air pulses from air pulse generator 12 to an air bladder 24 of garment 14. In some embodiments, HFCWO system 10 may include only one hose 16. In other embodiments, HFCWO system 10 may include more than two hoses 16.

Air pulse generator 12 includes a housing 18 as shown in Fig. 1. Housing 18 includes outlet ports 20 through which air pulses are expelled from housing 18. Air pulse generator 12 also includes magnets 22 that are adjacent to a proximal end of each outlet port 20, as shown in Fig. 3. Magnets 22 may be one or more magnetic rings. In some embodiments, housing 18 may have one outlet port 20 and/or air pulse generator 12 may have one magnet 22. In other embodiments, housing 18 may have more than two outlet ports 20 and/or air pulse generator 12 may have more than two magnets 22. In some embodiments, magnet 22 is molded into outlet port 20.

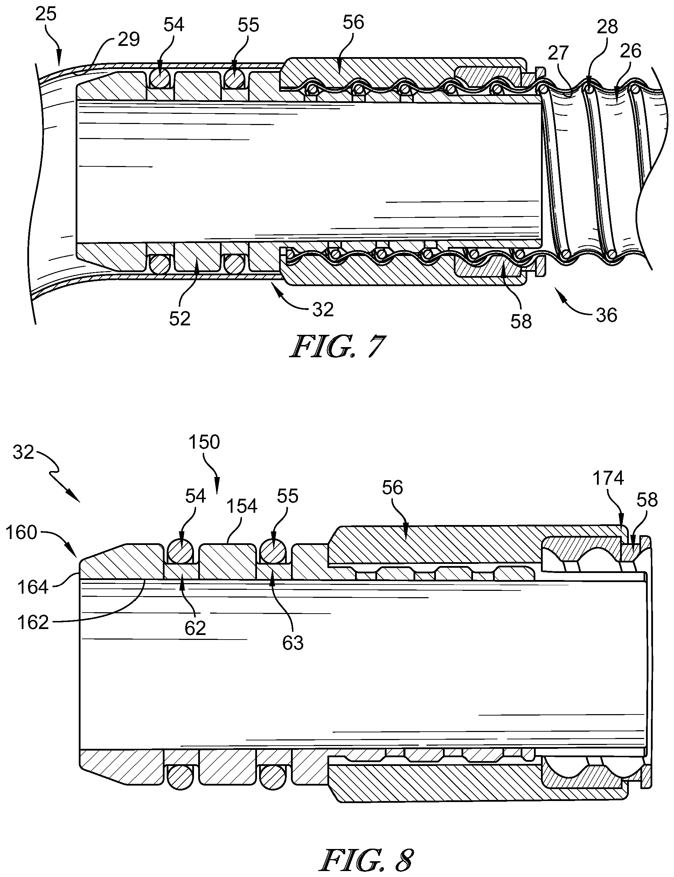

Garment 14 includes one or more air bladders 24, as shown in Fig. 1. The one or more air bladders 24 receive air pulses from air pulse generator 14 for application of air pulses to a torso of patient 11. In the illustrative embodiment, garment 14 has one air bladder 24 that communicates pneumatically with both hoses 16. In other embodiments, garment 14 may have two or more air bladders 24. Additionally, the one or more air bladders 24 may each include a tubular inlet port 25, as shown in Fig. 7. Garment 14 may be a therapy garment.

An example hose 16 of the HFCWO system 10 is shown in Fig. 2. Hose 16 includes a tube 26, a reinforcement coil 28, a first connector 30, and a second connector 32, and a central axis 13 extends generally through the center of hose 16 between first connector 30 and second connector 32. Tube 26 is made of a pliable material. Illustrative reinforcement coil 28 comprises a wire in some embodiments, such as the illustrative embodiment, and comprises a thread that is molded integrally with the tube 26 in other embodiments. Reinforcement coil 28 is referred to as reinforcement wire 28 in the description below. Reinforcement wire 28 is embedded in the pliable material of tube 26 and is configured as a helix, as shown in Fig 3. Tube 26 and reinforcement wire 28 extend between a first end region 34 of hose 16 and a second end region 36 of hose 16. First connector 30 is attached to first end region 34. Second connector 32 is attached to second end region 36.

First connector 30 is configured to be coupled to outlet port 20 and second connector 32 is configured to be coupled to tubular inlet port 25 such that air pulses from air pulse generator 12 pass through outlet port 20, first connector 30, tube 26, second connector 32, and tubular inlet port 25 to air bladders 24. In some embodiments, the hose 16 may have a length of about 1500 millimeters (mm) between a distal edge 164 of the second connector 32 and a distal edge 39 of the first connector 30. In other embodiments, the length of the hose 16 may be at or about between 1480 and 1520 mm between distal edge 164 of the second connector 32 and distal edge 39 of the first connector 30. The length of the hose 16 may be less than about 1480 mm or greater than about 1520 mm in other embodiments.

The pliable material of tube 26 may be any material suitable for assembling hose 16 in HFCWO system 10 or any other system in which hose 16 may be used. For example, the pliable material of tube 26 may be any synthetic polymer of plastic, such as flexible polyvinyl chloride (PVC), polyethylene, or polypropylene. In some embodiments, the tube 26 may be made entirely of flexible PVC. In other embodiments, the tube 26 may be made of a combination of different synthetic polymers of plastic and/or other materials. Likewise, reinforcement wire 28 may be any material, such as any metal or alloy, suitable for embedding in the pliable material of tube 26. In some embodiments, the reinforcement wire 28 may be made of steel or brass coils.

First connector 30 is configured to be coupled to outlet port 20, as shown in Fig. 3. In the illustrative embodiment, first connector 30 includes a first annular member 38, a metal element 40, a second annular member 42, and a third annular member 44. First annular member 38 is configured for threaded engagement with reinforcement wire 28 at first end region 34. Metal element 40 comprises a metal ring 40 in the illustrative example, but may comprise blocks, disks, arced segments, etc. in other embodiments. In the description below, metal element 40 is referred to as metal ring 40. Metal ring 40 is configured to attract to magnet 22 when first connector 30 is coupled to outlet port 20. Second annular member 42 is configured to at least partially encapsulate tube 26 and reinforcement wire 28. Third annular member 44 is configured for threaded engagement with reinforcement wire 28, as shown in Figs. 4-6. In some embodiments, first connector 30 may not include second annular member 42 and/or third annular member 44.

First annular member 38 includes an enlarged distal ring 68, an intermediate tubular portion 70, and a threaded tubular portion 72, as shown in Fig. 4A. Enlarged distal ring 68 is configured to hold metal ring 40. Intermediate tubular portion 70 is configured to engage second annular member 42. Threaded tubular portion 72 is configured to engage tube 26 and/or reinforcement wire 28.

Enlarged distal ring 68 includes a ring-receiving ridge 74, a first ring-receiving groove 76, a second ring-receiving groove 78, and a third ring-receiving groove 80, as shown in Fig. 4A. Ring-receiving ridge 74 and ring-receiving grooves 76, 78, 80 cooperate to hold metal ring 40. Ring-receiving ridge 74 extends radially inward of first and second ring-receiving grooves relative to central axis 13. First ring-receiving groove 76 is immediately distal to ring-receiving ridge 74, while second ring-receiving groove 78 is immediately proximal to ring-receiving ridge 74. Ring-receiving ridge 74 and first and second ring-receiving grooves 76, 78 cooperate to hold or receive a distal end 85 of metal ring 40. Third ring-receiving groove 80 is immediately proximal to second ring-receiving groove 78. Third ring-receiving groove 80 includes a distal inner surface 82 and a sloped proximal inner surface 84 which cooperate to receive a proximal end 86 of metal ring 40. In some embodiments, the inner diameters of first, second, and third ring-receiving grooves 76, 78, 80 and ring-receiving ridge 74 may range from about 30.5 mm to about 35 mm. In other embodiments, the inner diameters may be less than 30.5 mm or greater than 35 mm. In some embodiments, enlarged distal ring 68 may have an outer diameter of about 38 mm. In other embodiments, enlarged distal ring 68 may have an outer diameter less than or greater than about 38 mm.

Still referring to Fig. 4A, intermediate tubular portion 70 is proximally inward of enlarged distal ring 68 and interconnects enlarged distal ring 68 and threaded tubular portion 72. Intermediate tubular portion 70 includes an intermediate distal region 88 and a transition region 90. Intermediate distal region 88 is configured to receive second annular member 42. Transition region 90 is configured to interconnect intermediate distal region 88 and threaded tubular portion 72. Transition region 90 defines a frustoconical surface 94 which axially extends between an inner surface 92 of intermediate distal region 88 and an inner surface 96 of the threaded tubular portion 72. The inner surface 96 of threaded tubular portion 72 defines a proximal inner diameter of transition region 90. In some embodiments, transition region 90 may have a proximal inner diameter of about 23.4 mm. The inner surface 92 of intermediate distal region 88 defines a distal inner diameter of transition region 90. In some embodiments, transition region 90 may have a distal inner diameter of about 28 mm. In other embodiments, the distal inner diameter and/or the proximal inner diameter may be less than 23.4 mm or greater than 28 mm. In some embodiments, the distal inner diameter and the proximal inner diameter may be about equal.

Intermediate distal region 88 has an inner diameter which is substantially equal to an inner diameter of metal ring 40 so that the inner surface 92 of intermediate distal region 84 is flush with an inner surface 95 of metal ring 40, as shown in Fig. 4A. In some embodiments, the intermediate distal region 88 may have an inner diameter of about 28 mm. In other embodiments, the inner diameter of the intermediate distal region 88 may be less than or greater than about 28 mm.

Intermediate distal region 88 includes one or more notches 98 which extend radially inward from an outer surface 100 of intermediate distal region 88 towards an inner surface 92 of intermediate distal region 88, as shown in Fig. 4A. The one or more notches 98 are configured to receive second annular member 42. A radially inward surface 104 of each of the one or more notches 98 is positioned between inner surface 92 and outer surface 100 of intermediate distal region 88. The one or more notches 98 are circumferentially spaced apart about the central axis 13. In one embodiment, the intermediate distal region 88 includes four notches 98. In some embodiments, the intermediate distal region 88 may have less than or more than four notches 98.

Threaded tubular portion 72 is immediately proximally inward of intermediate tubular portion 70. Threaded tubular portion 72 includes one or more threads 108 configured to engage with tube 26 and reinforcement wire 28, as shown in Figs. 3 and 4A. The one or more threads 108 cooperate to define one or more helical grooves 46 each positioned between each thread 108 configured for threaded engagement with reinforcement wire 28 within a bore (not shown) of tube 26 at first end region 34. In some embodiments, threaded tubular portion 72 may be glued or mechanically snap-fitted into the bore of tube 26. In the illustrative embodiment, the one or more threads 108 extend partway about the axial length of threaded tubular portion 72. In other embodiments, the one or more threads 108 may extend the entire axial length of threaded tubular portion 72. The threaded tubular portion 72 may have a first outer diameter of about 25.5 mm. The one or more threads 108 may cooperate to define a second outer diameter of the threaded tubular portion 72 of about 27.2 mm. The threaded tubular portion 72 may have an inner diameter of about 22.6 mm. In some embodiments, the first outer diameter may be less than or greater than about 25.5 mm, the second outer diameter may be less than or greater than about 27.2 mm, and the inner diameter may be less than or greater than about 22.6 mm.

Metal ring 40 is coupled to a distal end of first annular member 38, as shown in Figs. 3-6. In the illustrative embodiment, metal ring 40 is held by enlarged distal ring 68. A first end surface 41 of metal ring 40 may be substantially coplanar with a distal edge 39 of enlarged distal ring 68, as shown in Figs. 4-5. In some embodiments, metal ring 40 may be molded into the enlarged distal ring 68, such as by use of insert molding. Metal ring 40 may be any magnetic metal or alloy suitable to attract to magnet 22 so that first connector 30 is securely attached to outlet port 20 regardless of the orientation of metal ring 40 with respect to magnet 22. For example, metal ring 40 may be made of stainless steel, such as 416 stainless steel which is passivation grade, steel, ferrite, alnico, permalloy, iron, cobalt, or nickel. In some embodiments, metal ring 40 is more than one metal ring 40. In other embodiments, metal ring 40 includes two or more metal segments configured to form metal ring 40. In additional embodiments, the attraction of the metal ring 40 to magnet 22 causes an audible noise, such as a click, when the metal ring 40 and the magnet 22 are first engaged.

Metal ring 40 includes a distal end 85 and a proximal end 86, as shown in Fig. 4D. Distal end 85 defines an annular groove 110 and first and second annular ridges 112, 114 configured to be in confronting relation with ring-receiving ridge 74 and first and second ring-receiving grooves 76, 78 of enlarged distal ring 68, respectively. Proximal end 86 defines an outer surface 116 configured to be in confronting relation with third ring-receiving groove 80. Distal end 85 and proximal end 86 cooperate to define an inner diameter of metal ring 40. In some embodiments, metal ring 40 may have an inner diameter of about 28 mm. In other embodiments, metal ring 40 may have an inner diameter greater than or less than 28 mm.

Second annular member 42 includes a distal annular member-locking region 118, a medial annular member-locking region 120, and a proximal annular member-locking region 122, as shown in Fig. 4B. Distal annular member-locking region 118, medial annular member-locking region 120, and proximal annular member-locking region 122 cooperate to define an outer surface 124 which slightly tapers radially inward along the axial length of the second annular member 42 from the proximal annular member-locking region 122 and the distal annular member-locking region 118. Distal annular member-locking region 118 is configured to couple to and at least partially encapsulate first annular member 38. Medial annular member-locking region 120 is configured to at least partially encapsulate tube 26. Proximal annular member-locking region 122 is configured to couple to and at least partially encapsulate third annular member 44.

Second annular member 42 also encapsulates an outer surface 27 of tube 26 at first end region 34. Thus, first annular member 38, third annular member 44, and tube 26 are securely assembled by second annular member 42 at first end region 34. In the illustrative embodiment, the second annular member 42 is formed by an over mold to encapsulate first annular member 38, third annular member 44, and tube 26. In some embodiments, the second annular member 42 may only encapsulate first annular member 38 or third annular member 44. Second annular member 42 may be formed by any over mold process or similar process. In some embodiments, distal annular member-locking region 118 may have a second helical groove which allows for threaded engagement with reinforcement wire 28 at first end region 34. In other embodiments, second annular member 42 is glued or mechanically snap-fitted onto tube 26.

Distal annular member-locking region 118 encapsulates intermediate tubular portion 70 of first annular member 38, as shown in Figs. 4 and 4B. Distal annular member-locking region 118 includes one or more latches 126 which are inserted into the one or more notches 98 of intermediate tubular portion 70 to secure second annular member 42 to first annular member 38. The one or more latches 126 extend radially inward from an inner surface 128 of distal annular member-locking region 118. In some embodiments, each of the one or more latches 126 may have a radial length between about 2 mm and about 3.1 mm. The one or more latches 126 are circumferentially spaced apart about the central axis 13. In one embodiment, the distal annular-member locking region 126 includes four latches 126. In some embodiments, the distal annular-member locking region 126 may have less than or more than four latches 126.

Proximal annular member-locking region 122 at least partially encapsulates third annular member 44, as shown in Figs. 4 and 4B. Proximal annular member-locking region 122 includes an annular latch 128 which extends radially inward from the outer surface 124. The annular latch 128 includes a distal surface 130 which is in confronting relation with a first surface 132 of an annular notch 134 of third annular member 44 and an inner surface 136 which is in confronting relation to an outer surface 138 of the annular notch 134. Thus, the proximal annular member-locking region 122 encapsulates a distal region 140 of the third annular member 44 to secure second annular member 42 to third annular member 44. In some embodiments, only the distal surface 130 or the inner surface 136 may be in confronting relation to the companion surface of the third annular member 44. In some embodiments, multiple annular latches 128 are circumferentially spaced apart about the central axis 13.

Third annular member 44 includes a distal region 140, an annular notch 134, and a proximal region 142 which cooperate to define a third helical groove 50 which allows for threaded engagement with reinforcement wire 28 at first end region 34, as shown in Figs. 4 and 4C. Distal region 140 is configured to be encapsulated by proximal annular member-locking region 122 of second annular member 42. Annular notch 134 is configured to engage annular latch 128 of second annular member 42. Proximal region 142 is proximally spaced from first and second annular members 38, 42, and an outer surface 148 of proximal region 142 defines the same diameter as defined by a grip surface 146 of distal region 140. The grip surface 146 of the distal region 140 may have a diameter of about 35 mm. In some embodiments, the diameter defined by the outer surface 158 may be greater than or less than the diameter defined by the grip surface 146. In the illustrative embodiment, third annular member 44 surrounds outer surface 27 of tube 26. In some embodiments, third annular member 44 is glued or mechanically snap-fitted onto tube 26.

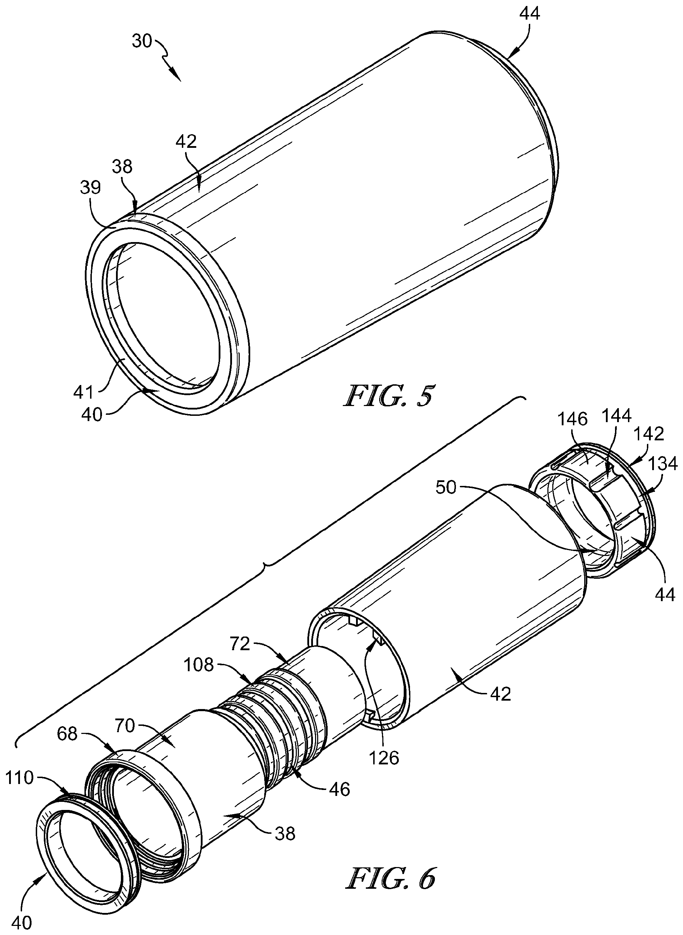

In the illustrative embodiment, distal region 140 includes a plurality of axial grooves 144 that are configured to provide the grip surface 146, as shown in Fig. 6. Therefore, the plurality of axial grooves 144 and the grip surface 146 cooperate to allow a user to grip the distal region 140 during assembly of the hose 16. Each axial groove 144 extends the entire axial length of distal region 140 and extends radially inward from the grip surface 146 of distal region 140 towards the outer surface 138 of the annular notch 134. The plurality of axial grooves 144 are spaced apart about the central axis 13. In some embodiments, each axial groove 144 may not extend the entire axial length of distal region 140. In other embodiments, distal region 140 may not include a plurality of axial grooves 144.

First annular member 38, second annular member 42, and third annular member 44 may each be made of any material, including any plastic, polymer, or resin material, suitable for a first connector 30 so that first connector 30 is securely assembled at first end region 34. First annular member 38, second annular member 42, and third annular member 44 may be made of the same or different materials. For example, first annular member, second annular member, and/or third annular member may be made of CYCOLOY^{™} polycarbonate/acrylonitrile-butadiene-styrene (PC/ABS) high impact amorphous thermoplastic, such as C6600 grade, or similar suitable resins, flame-retardant resins, or polymers.

In the illustrative embodiment, the axial length of first annular member 38 is greater than the axial length of both the second annular member 42 and the third annular member 44, as shown in Fig. 4. The axial length of the second annular member 42 is also greater than the axial length of the third annular member 44. In the illustrative embodiment, the first annular member 38 has an axial length at least 5 times greater than the axial length of the third annular member 44, while the second annular member 42 has an axial length at least 4 times greater than the axial length of the third annular member 44. For example, in some embodiments, the axial length of the first annular member 38 may be about 81.5 mm, the axial length of the second annular member 42 may be about 73 mm, and the axial length of the third annular member 44 may be about 15 mm. In other embodiments, the axial length of the first annular member 38 may be greater than or less than about 81.5 mm, the axial length of the second annular member 42 may be greater than or less than about 73 mm, and/or the axial length of the third annular member 44 may be greater than or less than about 15 mm.

Second connector 32 is configured to be coupled to inlet port 25, as shown in Fig. 7. Second connector 32 includes a first annular member 52, O-rings 54, 55, second annular member 56, and third annular member 58. First annular member 52 is configured for threaded engagement with reinforcement wire 28 at second end region 36. O-rings 54, 55 are configured to frictionally engage with an inner surface 29 of inlet port 25. Second annular member 56 is configured to at least partially encapsulate tube 26 and reinforcement wire 28. Third annular member 58 is configured for threaded engagement with reinforcement wire 28, as shown in Figs. 7-10. In some embodiments, second connector 32 may not include second annular member 56 and/or third annular member 58.

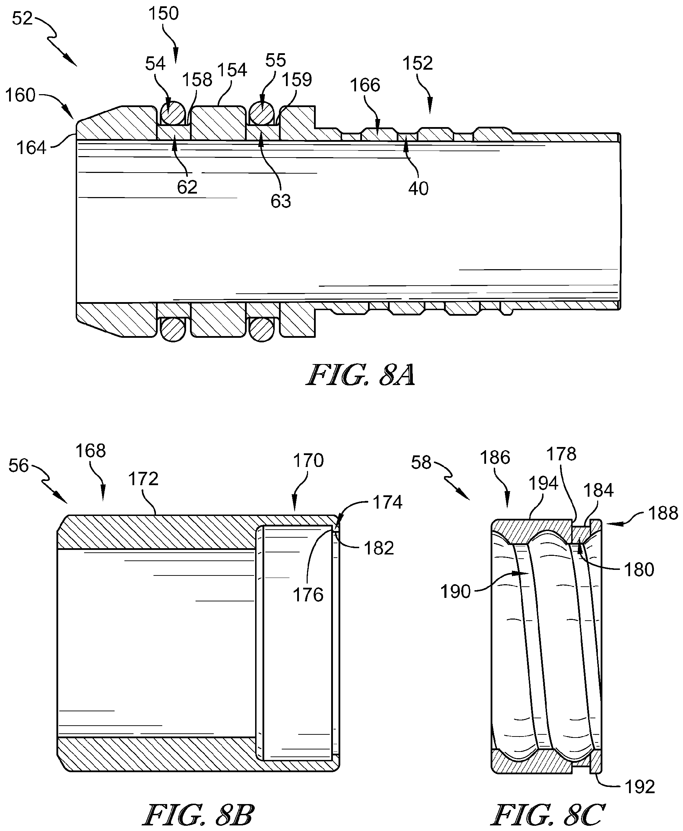

First annular member 52 includes an O-ring cuff 150 and a threaded tubular portion 152, as shown in Figs. 8 and 8A. O-ring cuff 150 is configured to hold O-rings 54, 55. Threaded tubular portion 152 is configured to engage tube 26 and/or reinforcement wire 28. O-ring cuff 150 and threaded tubular portion 152 cooperate to define an inner surface 162. Inner surface 162 defines an inner diameter of first annular member 52. For example, inner surface 162 may define an inner diameter of about 24 mm. In some embodiments, an inner diameter of first annular member 52 may be greater than or less than 24 mm.

O-ring cuff 150 includes first and second circumferential grooves 62, 63 configured to hold O-rings 54, 55. Circumferential grooves 62, 63 each extend radially inward from an outer surface 154 of O-ring cuff 150 towards the inner surface 162 of first annular member 52. A radially inward surface 158, 159 of each circumferential groove 62, 63 is positioned radially between outer surface 154 and inner surface 156. Radially inward surfaces 158, 159 cooperate to define an outer diameter of circumferential grooves 62, 63. For example, the circumferential grooves 62, 63 may define an outer diameter of about 28 mm. In other embodiments, circumferential grooves 62, 63 may define an inner diameter greater than or less than 28 mm. In the illustrative embodiment, O-ring cuff 150 includes two circumferential grooves 62, 63. In other embodiments, O-ring cuff 150 may include greater than or less than two circumferential grooves 62, 63.

O-ring cuff 150 also includes a tapered end 160 as shown in Figs. 8 and 8A which is configured to help guide first annular member 52 into inlet port 25 of garment 14 during insertion thereof. Tapered end 160 defines a first outer diameter located distally adjacent to first groove 62 and a second outer diameter located at a distal surface 164 of O-ring cuff 150. In the illustrative embodiment, the first outer diameter is greater than the second outer diameter. For example, the first outer diameter may be about 33.3 mm and the second outer diameter may be about 27.8 mm. In other embodiments, the first outer diameter and/or the second outer diameter may be greater than 33.3 mm or less than 27.8 mm.

Threaded tubular portion 152 is immediately proximally inward of O-ring cuff 150, as shown in Fig. 8. Threaded tubular portion 152 includes one or more threads 166 configured to engage with tube 26 and reinforcement wire 28, as shown in Figs. 8 and 8A. The one or more threads 166 cooperate to define one or more helical grooves 60 each positioned between each thread 166 configured for threaded engagement with reinforcement wire 28 within a bore (not shown) of tube 26 at second end region 36. In some embodiments, threaded tubular portion 152 may be glued or mechanically snap-fitted into the bore of tube 26. In the illustrative embodiment, the one or more threads 166 extend partway about the axial length of threaded tubular portion 152. In other embodiments, the one or more threads 166 may extend the entire axial length of threaded tubular portion 152. The threaded tubular portion 152 may have a first outer diameter of about 25.5 mm defined by the one or more helical grooves 60. The one or more threads 166 may cooperate to define a second outer diameter of the threaded tubular portion 152 of about 27.2 mm. In some embodiments, the first outer diameter may be less than or greater than about 25.5 mm and/or the second outer diameter may be less than or greater than about 27.2 mm

O-rings 54, 55 are positioned within circumferential grooves 62, 63, as shown in Figs. 8 and 8A. O-rings 54, 55 each define an outer diameter which extends radially outward of the outer surface 154 of O-ring cuff 150 so that O-rings 54, 55 can frictionally engage with inner surface 27 of outlet port 25. For example, O-rings 54, 55 may define an outer diameter of about 34.7 mm. O-rings 54, 55 may be made of any material, including any rubber material, suitable for frictionally engaging with inner surface 27 of outlet port 25. For example, O-rings 54, 55 may be made of fluorine rubber or any other fluoroelastomer material.

Second annular member 56 includes a distal annular-member region 168 and a proximal annular member-locking region 170, as shown in Figs. 8 and 8B. Distal annular-member region 168 and proximal annular member-locking region 170 cooperate to define an outer surface 172 of the second annular member 56. Distal annular-member region 168 is configured to at least partially encapsulate tube 26. Proximal annular member-locking region 170 is configured to couple to and at least partially encapsulate third annular member 58. Second annular member 56 also encapsulates an outer surface 27 of tube 26 at second end region 36. Thus, first annular member 52, third annular member 58, and tube 26 are securely assembled by second annular member 56 at second end region 36. In the illustrative embodiment, the second annular member 56 is formed by an over mold process to encapsulate third annular member 58 and tube 26. In some embodiments, the second annular member 56 may also encapsulate first annular member 52. Second annular member 56 may be formed by any over mold process or similar process. In some embodiments, distal annular-member region 168 may have a second helical groove which allows for threaded engagement with reinforcement wire 28 at second end region 36. In other embodiments, second annular member 56 is glued or mechanically snap-fitted onto tube 26.

Proximal annular member-locking region 170 at least partially encapsulates third annular member 58, as shown in Figs. 8 and 8B. Proximal annular member-locking region 170 includes an annular latch 174 which extends radially inward from the outer surface 172. The annular latch 174 includes a distal surface 176 which is in confronting relation with a first surface 178 of an annular notch 180 of third annular member 58 and an inner surface 182 which is in confronting relation to an outer surface 184 of the annular notch 180. Thus, the proximal annular member-locking region 170 encapsulates a distal region 186 of the third annular member 58 to secure second annular member 56 to third annular member 58. In some embodiments, only the distal surface 176 or the inner surface 182 may be in confronting relation to the companion surface of the third annular member 58. In some embodiments, multiple annular latches 174 are circumferentially spaced apart about the central axis 13.

Third annular member 58 includes a distal region 186, an annular notch 180, and a proximal region 188 which cooperate to define a third helical groove 190 which allows for threaded engagement with reinforcement wire 28 at second end region 36, as shown in Figs. 8 and 8C. Distal region 186 is configured to be encapsulated by proximal annular member-locking region 170 of second annular member 56. Annular notch 180 is configured to engage annular latch 174 of second annular member 56. Proximal region 188 is proximally spaced from first and second annular members 52, 56, and an outer surface 192 of proximal region 188 defines the same diameter as defined by a grip surface 194 of distal region 186. The grip surface 194 of the distal region 186 may have a diameter of about 35 mm. In some embodiments, the diameter defined by the outer surface 192 may be greater than or less than the diameter defined by the grip surface 194. In the illustrative embodiment, third annular member 58 surrounds outer surface 27 of tube 26. In some embodiments, third annular member 44 is glued or mechanically snap-fitted onto tube 26.

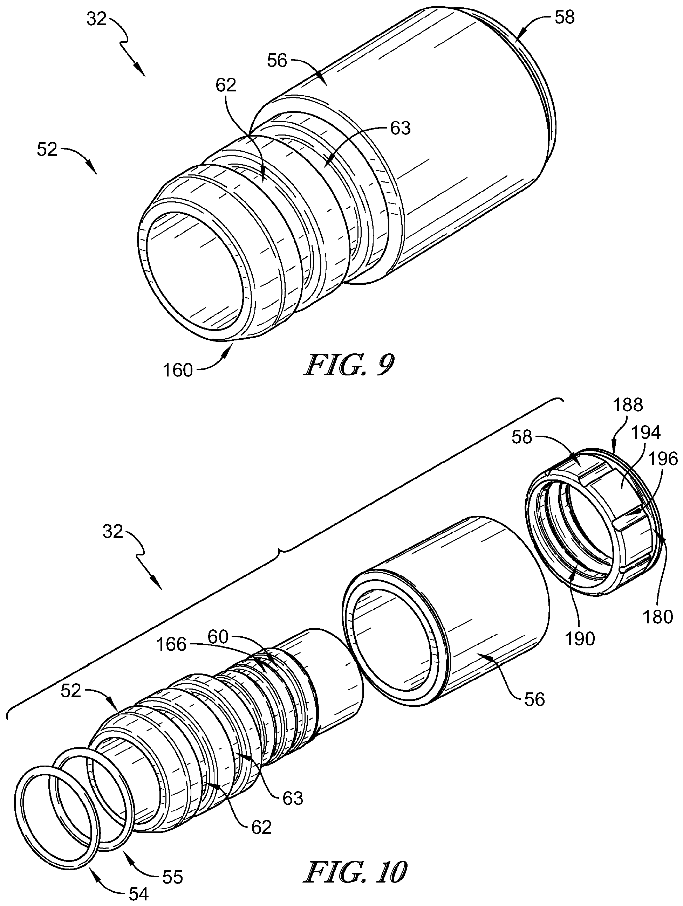

In the illustrative embodiment, distal region 186 includes a plurality of axial grooves 196 that are configured to provide the grip surface 194, as shown in Fig. 10. Therefore, the plurality of axial grooves 196 and the grip surface 194 cooperate to allow a user to grip the distal region 186 during assembly of the hose 16. Each axial groove 196 extends the entire axial length of distal region 186 and extends radially inward from a grip surface 194 of distal region 186 towards the outer surface 198 of the annular notch 180. The plurality of axial grooves 196 are spaced apart about the central axis 13. In some embodiments, each axial groove 196 may not extend the entire axial length of distal region 186. In other embodiments, distal region 186 may not include a plurality of axial grooves 196.

First annular member 52, second annular member 54, and third annular member 56 may each be made of any material, including any plastic, polymer, or resin material, suitable for a second connector 32 so that second connector 32 is securely assembled at second end region 36. First annular member 52, second annular member 54, and third annular member 56 may be made of the same or different materials. For example, first annular member, second annular member, and/or third annular member may be made of CYCOLOY^{™} polycarbonate/acrylonitrile-butadiene-styrene (PC/ABS) high impact amorphous thermoplastic, such as C6600 grade, or similar suitable resins, flam-retardant resins, or polymers.

In the illustrative embodiment, the axial length of first annular member 52 is greater than the axial length of both the second annular member 56 and the third annular member 58. The axial length of the second annular member 56 is also greater than the axial length of the third annular member 58. In the illustrative embodiment, the first annular member 52 has an axial length at least 5 times greater than the axial length of the third annular member 58, while the second annular member 56 has an axial length at least 2 times greater than the axial length of the third annular member 58. For example, in some embodiments, the axial length of the first annular member 52 may be about 77.5 mm, the axial length of the second annular member 56 may be about 41.1 mm, and the axial length of the third annular member 58 may be about 15 mm. In other embodiments, the axial length of the first annular member 52 may be greater than or less than about 77.5 mm, the axial length of the second annular member 56 may be greater than or less than about 41.1 mm, and/or the axial length of the third annular member 58 may be greater than or less than about 15 mm.

Hose 16 of the present disclosure allows for 360-degree orientation insertion of first connector 30 into outlet port 20 so that attachment of first connector 30 to outlet port 20 is not orientation-dependent. When inserting first connector 30 into outlet port 20, the attraction of metal ring 40 to magnet 22 allows first connector 30 to self-align and lock into outlet port 20 when metal ring 40 is near magnet 22. Once metal ring 40 and magnet 22 engage, an audible click may occur, giving a cue to users that hose 16 is connected to outlet port 20. First connector 30 may self-align and lock into outlet port when metal ring 40 and magnet 22 are less than 1 centimeter apart, for example.

The connection of hose 16 to outlet port 20 may withstand, for example, between negative 13 kPa to positive 13 kPa of pressure produced by air pulse generator 12 and communicated pneumatically to garment 14. A distal end of first annular member 30 may counter the weight of other components of hose 16 to prevent disengagement of hose 16 from outlet port 20.

Hose 16 of the present disclosure has several advantages. First connector 30 allows for 360-degree orientation insertion into outlet port 20 so that attachment of first connector 30 to outlet port 20 is not orientation-dependent. An audible sound created by metal ring 40 and magnet 22 when they engage gives a sound cue in addition to a visual cue to users that hose 16 is connected to outlet port 20. Should a patient 11 wearing garment vest 14 walk away from air pulse generator 12, first connector 30 self-detaches from outlet port 20 so that air pulse generator 12 is not pulled with garment vest 14 and hose 16, preventing damages to air pulse generator 12. Connecting first connector 30 to outlet port 20 using a metal ring 40 in first connector 30 and magnet 22 attached to outlet port 20 is also intuitive and easy to use for many users.

When terms of degree such as "generally," "substantially," and "about" are used herein in connection with a numerical value or a qualitative term susceptible to a numerical measurement (e.g., vertical, horizontal, aligned), it is contemplated that an amount that is plus or minus 10 percent, and possibly up to plus or minus 20 percent, of the numerical value is covered by such language, unless specifically noted otherwise. For example, "vertical" may be defined as 90 degrees from horizontal and so "substantially vertical" according to the present disclosure means 90 degrees plus or minus 9 degrees, and possibly up to plus or minus 18 degrees. The same tolerance range for "substantially horizontal" is also contemplated. Otherwise, a suitable definition for "generally," "substantially," and "about" is largely, but not necessarily wholly, the term specified.

When the terms "a" or "an" or the phrases "one or more" or "at least one" are used herein, including in the claims, they are all intended to be synonymous and mean that one or more than one of the thing recited may be present. Similarly, the phrases "a plurality" or "two or more" or "at least two" are used, they are all intended to be synonymous and mean that two or more than two of the thing recited may be present.

## Claims

1. A high frequency chest wall oscillation (HFCWO) system (10) for applying HFCWO therapy to a torso of a patient (11), the HFCWO system (10) comprising
an air pulse generator (12) configured to generate air pulses, the air pulse generator (12) having a housing (18) including at least one outlet port (20) through which the air pulses are expelled from the housing (18), the air pulse generator (12) including a magnet (22) adjacent the outlet port (20),
a garment (14) configured to be worn by a patient (11), the garment (14) having at least one air bladder (24) that receives the air pulses from the air pulse generator (12) for application to the patient's torso, and
at least one hose (16) configured to deliver the air pulses from the air pulse generator (12) to the at least one air bladder (24) of the garment (14), wherein the at least one hose (16) includes a tube (26) made of a pliable material, a reinforcement coil (28) coupled to the pliable material of the tube (26) and configured as a helix extending between first (34) and second end regions (36) of the hose (16), a first connector (30) attached to the first end region (34) of the hose (16), and a second connector (32) attached to the second end region (36) of the hose (16), wherein the first connector (30) includes a first annular member (38) formed with a first helical groove configured for threaded engagement with the reinforcement coil (28) at the first end region (34) of the hose (16), the first connector (30) including a metal element (40) coupled to a distal end of the first annular member (38) for attraction to the magnet (22) when first connector (30) is coupled to the outlet port (20) of the housing (18) of the air pulse generator (12), wherein the reinforcement coil (28) is embedded in the pliable material such that a portion of the pliable material is received inside the first helical groove.

2. The HFCWO system of claim 1, wherein the first helical groove of the first annular member is configured for threaded engagement with the reinforcement coil within a bore of the tube at the first end region of the hose.

3. The HFCWO system of claim 2, wherein the first connector includes a second annular member having a second helical groove configured for threaded engagement with the reinforcement coil surrounding an outer surface of the tube at the first end region of the hose.

4. The HFCWO system of claim 3, wherein the first connector includes a third annular member configured for threaded engagement with the reinforcement coil surrounding the outer surface of the tube at the first end region of the hose, the third annular member surrounding a proximal end of the first annular member.

5. The HFCWO system of claim 2, wherein the first connector includes a second annular member, wherein the second annular member is formed by an over mold to encapsulate the first annular member and a distal end of the tube such that the first annular member and the tube are securely assembled.

6. The HFCWO system of claim 5, wherein the first connector includes a third annular member configured for threaded engagement with the reinforcement coil surrounding an outer surface of the tube, the third annular member surrounding a proximal end of the first annular member, and wherein the second annular member further encapsulates at least a distal end of the third annular member such that the first annular member, the third annular member, and the tube are securely assembled.

7. The HFCWO system of claim 1, wherein the metal element comprises a metal ring that is embedded in the first annular member at the distal end of the first annular member;
wherein optionally a first end surface of the metal ring is substantially coplanar with a distal end surface of the first annular member.

8. The HFCWO system of claim 1, wherein the magnet comprises a magnetic ring adjacent a proximal end of the outlet port.

9. The HFCWO system of claim 1, wherein the second connector includes a first annular member formed with a first helical groove configured for threaded engagement with the reinforcement coil at the second end region of the hose.

10. The HFCWO system of claim 9, wherein the first helical groove of the first annular member of the second connector is configured for threaded engagement with the reinforcement coil within a bore of the tube at the second end region of the hose.

11. The HFCWO system of claim 9, wherein the first annular member of the second connector includes first and second grooves at a distal end of the first annular member and wherein the second connector further includes first and second O-rings received in the respective first and second grooves such that the first and second O-rings frictionally engage with an inner surface of a tubular inlet port of the at least one bladder of the garment when the second connector is installed in the tubular inlet port.

12. The HFCWO system of claim 9, wherein the second connector includes a second annular member formed with a second helical groove configured for threaded engagement with the reinforcement coil surrounding an outer surface of the tube at the second end region of the hose;
wherein optionally the second connector includes a third annular member formed with a third helical groove configured for threaded engagement with the reinforcement coil surrounding the outer surface of the tube at the second end region of the hose, the third annular member surrounding a proximal end of the first annular member.

13. The HFCWO system of claim 9, wherein the second connector includes a second annular member, wherein the second annular member is formed by an over mold to encapsulate the first annular member and a distal end of the tube such that the first annular member and the tube are securely assembled;
wherein optionally the second connector includes a third annular member configured for threaded engagement with the reinforcement coil surrounding the outer surface of the tube, the third annular member surrounding a proximal end of the first annular member, and wherein the second annular member further encapsulates at least a distal end of the third annular member such that the first annular member, the third annular member, and the tube are securely assembled.

14. The HFCWO system of claim 1, wherein the reinforcement coil comprises a reinforcement wire.

15. The HFCWO system of claim 1, wherein the reinforcement coil comprises a reinforcement thread molded integrally with the tube.

## Patentansprüche

1. Hochfrequenzbrustwandoszillations- (HFCWO-) system (10) zum Anwenden einer HFCWO-Therapie an einem Oberkörper eines Patienten (11), wobei das HFCWO-System (10) Folgendes umfasst:
einen Luftpulsgenerator (12), der ausgebildet ist, um Luftpulse zu erzeugen, wobei der Luftpulsgenerator (12) ein Gehäuse (18) aufweist, das mindestens einen Auslassanschluss (20) einschließt, durch den die Luftpulse aus dem Gehäuse (18) ausgestoßen werden, und wobei der Luftpulsgenerator (12) einen Magneten (22) angrenzend zum Auslassanschluss (20) einschließt,
ein Kleidungsstück (14), das ausgebildet ist, um von einem Patienten (11) getragen zu werden, wobei das Kleidungsstück (14) mindestens eine Luftblase (24) aufweist, die die Luftpulse vom Luftpulsgenerator (12) empfängt, um sie auf den Oberkörper des Patienten aufzubringen, und
mindestens einen Schlauch (16), der ausgebildet ist, um die Luftpulse vom Luftpulsgenerator (12) an die mindestens eine Luftblase (24) des Kleidungsstücks (14) zu liefern, wobei der mindestens eine Schlauch (16) einen Schlauch (26) aus einem biegsamen Material, eine mit dem biegsamen Material des Schlauchs (26) gekoppelte Verstärkungsspirale (28) einschließt, und ausgebildet als eine Helix, die sich zwischen einem ersten (34) und einem zweiten Endgebiet (36) des Schlauchs (16) erstreckt, einen ersten Verbinder (30), der am ersten Endgebiet (34) des Schlauchs (16) angebracht ist, und einen zweiten Verbinder (32), der am zweiten Endgebiet (36) des Schlauchs (16) angebracht ist, wobei der erste Verbinder (30) ein erstes ringförmiges Element (38) einschließt, das mit einer ersten helikalen Nut ausgebildet ist, ausgebildet für Gewindeeingriff mit der Verstärkungsspirale (28) am ersten Endgebiet (34) des Schlauchs (16), wobei der erste Verbinder (30) ein Metallelement (40) einschließt, das mit einem distalen Ende des ersten ringförmigen Elements (38) gekoppelt ist für Anziehung vom Magneten (22), wenn der erste Verbinder (30) mit dem Auslassanschluss (20) des Gehäuses (18) des Luftpulsgenerators (12) gekoppelt ist, wobei die Verstärkungsspirale (28) derart in das biegsame Material eingebettet ist, dass ein Abschnitt des biegsamen Materials innerhalb der ersten helikalen Nut empfangen wird.

2. HFCWO-System nach Anspruch 1, wobei die erste helikale Nut des ersten ringförmigen Elements konfiguriert ist für Gewindeeingriff mit der Verstärkungsspirale innerhalb einer Bohrung des Schlauchs im ersten Endgebiet des Schlauchs.

3. HFCWO-System nach Anspruch 2, wobei der erste Verbinder ein zweites ringförmiges Element einschließt, das eine zweite helikale Nut aufweist, ausgebildet für Gewindeeingriff mit der Verstärkungsspirale, die eine Außenoberfläche des Schlauchs im ersten Endgebiet des Schlauchs umgibt.

4. HFCWO-System nach Anspruch 3, wobei der erste Verbinder ein drittes ringförmiges Element einschließt, ausgebildet für Gewindeeingriff mit der Verstärkungsspirale, die die Außenoberfläche des Schlauchs am ersten Endgebiet des Schlauchs umgibt, wobei das dritte ringförmige Element ein proximales Ende des ersten ringförmigen Elements umgibt.

5. HFCWO-System nach Anspruch 2, wobei der erste Verbinder ein zweites ringförmiges Element einschließt, wobei das zweite ringförmige Element durch eine Umspritzung ausgebildet ist, um das erste ringförmige Element und ein distales Ende des Schlauchs derart zu verkapseln, dass das erste ringförmige Element und der Schlauch sicher zusammengebaut sind.

6. HFCWO-System nach Anspruch 5, wobei der erste Verbinder ein drittes ringförmige Element einschließt, ausgebildet für Gewindeeingriff mit der Verstärkungsspirale, die eine Außenoberfläche des Schlauchs umgibt, wobei das dritte ringförmige Element ein proximales Ende des ersten ringförmigen Elements umgibt, und wobei das zweite ringförmige Element weiter mindestens ein distales Ende des dritten ringförmigen Elements derart verkapselt, sodass das erste ringförmige Element, das dritte ringförmige Element und der Schlauch sicher zusammengebaut sind.

7. HFCWO-System nach Anspruch 1, wobei das Metallelement einen Metallring umfasst, der am distalen Ende des ersten ringförmigen Elements in das erste ringförmige Element eingebettet ist;
wobei optional eine erste Endoberfläche des Metallrings im Wesentlichen koplanar zu einer distalen Endoberfläche des ersten ringförmigen Elements ist.

8. HFCWO-System nach Anspruch 1, wobei der Magnet einen magnetischen Ring umfasst, der an ein proximales Ende des Auslassanschlusses angrenzt.

9. HFCWO-System nach Anspruch 1, wobei der zweite Verbinder ein erstes ringförmige Element einschließt, das mit einer ersten helikalen Nut ausgebildet ist, ausgebildet für einen Gewindeeingriff mit der Verstärkungsspirale am zweiten Endgebiet des Schlauchs.

10. HFCWO-System nach Anspruch 9, wobei die erste helikale Nut des ersten ringförmigen Elementes des zweiten Verbinders konfiguriert ist für Gewindeeingriff mit der Verstärkungsspirale innerhalb einer Bohrung des Schlauchs am zweiten Endgebiet des Schlauchs.

11. HFCWO-System nach Anspruch 9, wobei das erste ringförmige Element des zweiten Verbinders erste und zweite Nuten an einem distalen Ende des ersten ringförmigen Elements einschließt, und wobei der zweite Verbinder weiter erste und zweite O-Ringe einschließt, die in jeweiligen ersten und zweiten Nuten empfangen werden, sodass die ersten und der zweiten O-Ringe reibschlüssig mit einer Innenoberfläche eines rohrförmigen Einlassanschlusses der mindestens einen Blase des Kleidungsstücks in Eingriff stehen, wenn der zweite Verbinder in dem rohrförmigen Einlassanschluss installiert ist.

12. HFCWO-System nach Anspruch 9, wobei der zweite Verbinder ein zweites ringförmige Element einschließt, das mit einer zweiten helikalen Nut ausgebildet ist, ausgebildet für Gewindeeingriff mit der Verstärkungsspirale die eine Außenoberfläche des Schlauchs im zweiten Endgebiet des Schlauchs umgibt;
wobei optional der zweite Verbinder ein drittes ringförmiges Element einschließt, das mit einer dritten helikalen Nut ausgebildet ist, ausgebildet für Gewindeeingriff mitder Verstärkungsspirale, die die Außenoberfläche des Schlauchs am zweiten Endgebiet des Schlauchs umgibt, wobei das dritte ringförmige Element ein proximales Ende des ersten ringförmigen Elements umgibt.

13. HFCWO-System nach Anspruch 9, wobei der zweite Verbinder ein zweites ringförmiges Element einschließt, wobei das zweite ringförmige Element durch eine Umspritzung ausgebildet ist, um das erste ringförmige Element und ein distales Ende des Schlauchs derart zu verkapseln, dass das erste ringförmige Element und der Schlauch sicher zusammengebaut sind;
wobei optional der zweite Verbinder ein drittes ringförmiges Element einschließt, ausgebildet für Gewindeeingriff mit der Verstärkungsspirale, die die Außenoberfläche des Schlauchs umgibt, wobei das dritte ringförmige Element ein proximales Ende des ersten ringförmigen Elements umgibt, und
wobei das zweite ringförmige Element weiter mindestens ein distales Ende des dritten ringförmigen Elements derart verkapselt, sodass das erste ringförmige Element, das dritte ringförmige Element und der Schlauch sicher zusammengebaut sind.

14. HFCWO-System nach Anspruch 1, wobei die Verstärkungsspirale einen Verstärkungsdraht umfasst.

15. HFCWO-System nach Anspruch 1, wobei die Verstärkungsspirale einen Verstärkungsfaden umfasst, der integral mit dem Schlauch geformt ist.

## Revendications

1. Système (10) d'oscillation haute fréquence extra-thoracique (HFCWO) pour appliquer une thérapie par HFCWO à un torse d'un patient (11), le système (10) de HFCWO comprenant
un générateur d'impulsions d'air (12) conçu pour générer des impulsions d'air, le générateur d'impulsions d'air (12) présentant un boîtier (18) incluant au moins un orifice de sortie (20) à travers lequel les impulsions d'air sont expulsées du boîtier (18), le générateur d'impulsions d'air (12) incluant un aimant (22) adjacent à l'orifice de sortie (20),
un vêtement (14) conçu pour être porté par un patient (11), le vêtement (14) présentant au moins un contenant d'air (24) qui reçoit les impulsions d'air du générateur d'impulsions d'air (12) pour application sur le torse du patient, et
au moins un flexible (16) conçu pour délivrer les impulsions d'air du générateur d'impulsions d'air (12) à l'au moins un contenant d'air (24) du vêtement (14), dans lequel l'au moins un flexible (16) inclut un tube (26) en un matériau pliable, une bobine de renfort (28) couplée au matériau pliable du tube (26) et conçue comme une hélice s'étendant entre les première (34) et deuxième régions d'extrémité (36) du flexible (16), un premier connecteur (30) fixé à la première région d'extrémité (34) du flexible (16), et un deuxième connecteur (32) fixé à la deuxième région d'extrémité (36) du flexible (16), dans lequel le premier connecteur (30) inclut un premier organe annulaire (38) formé avec une première rainure hélicoïdale conçue pour un engagement fileté avec la bobine de renfort (28) au niveau de la première région d'extrémité (34) du flexible (16), le premier connecteur (30) incluant un élément métallique (40) couplé à une extrémité distale du premier organe annulaire (38) pour une attraction par l'aimant (22) lorsque le premier connecteur (30) est couplé au port de sortie (20) du boîtier (18) du générateur d'impulsions d'air (12), dans lequel la bobine de renfort (28) est intégrée dans le matériau pliable de sorte qu'une portion du matériau pliable soit reçue à l'intérieur de la première rainure hélicoïdale.

2. Système de HFCWO selon la revendication 1, dans lequel la première rainure hélicoïdale du premier organe annulaire est conçue pour un engagement fileté avec la bobine de renfort à l'intérieur d'un alésage du tube au niveau de la première région d'extrémité du flexible.

3. Système de HFCWO selon la revendication 2, dans lequel le premier connecteur inclut un deuxième organe annulaire présentant une deuxième rainure hélicoïdale conçue pour un engagement fileté avec la bobine de renfort entourant une surface externe du tube au niveau de la première région d'extrémité du flexible.

4. Système de HFCWO selon la revendication 3, dans lequel le premier connecteur inclut un troisième organe annulaire conçu pour être en engagement fileté avec la bobine de renfort entourant la surface externe du tube au niveau de la première région d'extrémité du flexible, le troisième organe annulaire entourant une extrémité proximale du premier organe annulaire.

5. Système de HFCWO selon la revendication 2, dans lequel le premier connecteur inclut un deuxième organe annulaire, dans lequel le deuxième organe annulaire est formé par un surmoule pour encapsuler le premier organe annulaire et une extrémité distale du tube de sorte que le premier organe annulaire et le tube soient solidement assemblés.

6. Système de HFCWO selon la revendication 5, dans lequel le premier connecteur inclut un troisième organe annulaire conçu pour être en engagement fileté avec la bobine de renfort entourant une surface externe du tube, le troisième organe annulaire entourant une extrémité proximale du premier organe annulaire, et dans lequel le deuxième organe annulaire encapsule en outre au moins une extrémité distale du troisième organe annulaire de sorte que le premier organe annulaire, le troisième organe annulaire et le tube soient solidement assemblés.

7. Système de HFCWO selon la revendication 1, dans lequel l'élément métallique comprend une bague métallique qui est intégrée dans le premier organe annulaire à l'extrémité distale du premier organe annulaire ; dans lequel facultativement une première surface d'extrémité de la bague métallique est sensiblement coplanaire avec une surface d'extrémité distale du premier organe annulaire.

8. Système de HFCWO selon la revendication 1, dans lequel l'aimant comprend une bague magnétique adjacente à une extrémité proximale de l'orifice de sortie.

9. Système de HFCWO selon la revendication 1, dans lequel le deuxième connecteur inclut un premier organe annulaire formé avec une première rainure hélicoïdale conçue pour un engagement fileté avec la bobine de renfort au niveau de la deuxième région d'extrémité du flexible.

10. Système de HFCWO selon la revendication 9, dans lequel la première rainure hélicoïdale du premier organe annulaire du deuxième connecteur est conçue pour un engagement fileté avec la bobine de renfort à l'intérieur d'un alésage du tube au niveau de la deuxième région d'extrémité du flexible.

11. Système de HFCWO selon la revendication 9, dans lequel le premier organe annulaire du deuxième connecteur inclut des première et deuxième rainures à une extrémité distale du premier organe annulaire et dans lequel le deuxième connecteur inclut en outre de premiers et deuxièmes joints toriques reçus dans les première et deuxième rainures respectives de sorte que les premier et deuxième joints toriques viennent en prise par friction avec une surface interne d'un orifice d'entrée tubulaire de l'au moins un contenant du vêtement lorsque le deuxième connecteur est installé dans l'orifice d'entrée tubulaire.

12. Système de HFCWO selon la revendication 9, dans lequel le deuxième connecteur inclut un deuxième organe annulaire formé avec une deuxième rainure hélicoïdale conçue pour un engagement fileté avec la bobine de renfort entourant une surface externe du tube au niveau de la deuxième région d'extrémité du flexible ;
dans lequel le deuxième connecteur inclut facultativement un troisième organe annulaire formé avec une troisième rainure hélicoïdale conçue pour un engagement fileté avec la bobine de renfort entourant la surface externe du tube au niveau de la deuxième région d'extrémité du flexible, le troisième organe annulaire entourant une extrémité proximale du premier organe annulaire.

13. Système de HFCWO selon la revendication 9, dans lequel le deuxième connecteur inclut un deuxième organe annulaire, dans lequel le deuxième organe annulaire est formé par un surmoule pour encapsuler le premier organe annulaire et une extrémité distale du tube de sorte que le premier organe annulaire et le tube soient solidement assemblés ;
dans lequel le deuxième connecteur inclut facultativement un troisième organe annulaire conçu pour être en engagement fileté avec la bobine de renfort entourant la surface externe du tube, le troisième organe annulaire entourant une extrémité proximale du premier organe annulaire, et dans lequel le deuxième organe annulaire encapsule en outre au moins une extrémité distale du troisième organe annulaire de sorte que le premier organe annulaire, le troisième organe annulaire et le tube soient solidement assemblés.

14. Système de HFCWO selon la revendication 1, dans lequel la bobine de renfort comprend un fil de renfort.

15. Système de HFCWO selon la revendication 1, dans lequel la bobine de renfort comprend un fil de renfort moulé d'un seul tenant avec le tube.
